# EUROPEAN PATENT APPLICATION

(11) **EP 4 400 307 A1**
(43) Date of publication of application: **17.07.2024**
(21) Application number: 22867035.2
(22) Date of filing: 24.06.2022
(51) Int. Cl.: B32B 27/30, B32B 27/18, B32B 27/32, C09D 133/06, C09D 183/12, D21H 19/20

(54) **PRINTING SHEET AND METHOD FOR MANUFACTURING PRINTING SHEET**

(30) Priority: 08.09.2021 JP 2021146449
(71) Applicant: TBM Co., Ltd., Tokyo 100-0006 (JP)
(72) Inventor: NAKAMURA, Hiroshi, Tokyo 100-0006 (JP); IDEI, Koji, Tokyo 100-0006 (JP)
(74) Representative: Epping - Hermann - Fischer
(86) International application number: PCT/JP2022/025398
(87) International publication number: WO 2023/037709

(57) **Abstract**

An object of the present invention is to provide a printing sheet having a coated layer for receiving ink on at least one surface of a substrate, the printing sheet having excellent printability, excellent adhesion between the substrate and the coated layer, and excellent antistatic performance and being less likely to cause paper jams or other troubles during printing, and to provide a method for producing the same. The present invention provides a printing sheet including a coated layer including an acrylic polymer on one surface or both surfaces of a substrate, in which a silicone-based surfactant is blended in a ratio of 0.10% by mass or more and 1.00% by mass or less relative to 100% by mass of the acrylic polymer in a continuous phase made of the acrylic polymer.

## Description

### Field

The present invention relates to a printing sheet and a method for producing a printing sheet. In detail, the present invention relates to a technology for improving printability, adhesion between a substrate and a coated layer, antistatic properties, and other properties for a printing sheet having the coated layer on the surface of the substrate.

### Background

Conventionally, printing sheets using paper or plastic sheets made of polyester, polypropylene, or the like as substrates thereof have been known. In particular, for applications requiring properties including water resistance and tear strength such as posters and outdoor printed products, for example, synthetic paper obtained by adding inorganic fillers and a small amount of additives to plastic sheets or thermoplastic resins and molding the resultant material into sheets and the like has been mainly used.

In addition, now, environmental protection has become an international issue and thus the reduction in consumption of thermoplastic plastics and paper materials has been significantly studied. From such a viewpoint, inorganic substance powder-blended thermoplastic plastic compositions made by highly blending inorganic substance powders into thermoplastic plastics have been developed and put into practical use as the printing sheets as described above (refer to, for example, Patent Literature 1).

Meanwhile, in the case where the sheets made of such materials as described above are particularly considered to be used for printing applications, the surface of the plastic sheets is frequently modified in order to improve adhesion between inks and the plastic sheets on the printing surface and to improve coloring. Specifically, a coating liquid made of a clay latex and an acrylic polymer is coated to form a coated layer, which is also called an ink receiving layer or a print receiving layer (refer to, for example, Patent Literature 2 to Patent Literature 4).

However, as described in Patent Literature 2 and Patent Literature 3, in the case where conventional acrylic polymers are applied, a problem of easily generating static electricity has arisen because the added hydrophilic acrylic polymer material for exhibiting an antistatic effect is highly depending on environments, in particular, in low humidity conditions such as winter, and thus the antistatic effect becomes low. Generation of static electricity causes problems of clogging during printing and blocking between sheets, which is not preferable.

Furthermore, in the case where the conventional acrylic polymers are coated onto olefinic plastic sheets such as polyethylene and polypropylene, polarity of the plastic sheets serving as substrates is low and thus the adhesive strength between the plastic sheets serving as the substrates and the coating liquids is weak depending on production conditions. Therefore, a problem of peeling off from the interface between the sheet and the coating also has arisen even when the coating is applied. In addition, when only the acrylic polymers have been used for coating, printability, in particular, toner fixability on laser beam printer (LBP) printing, has been poor and the toner has been required to be fixed under high temperature. This has caused a problem of frequent occurrence of troubles in which the sheets are melted due to heat and sheet jams (paper jams) occur in printing equipment. Other printing methods, such as inkjet printing, may fail to print properly due to poor adhesiveness to an ink.

Patent Literature 4 has disclosed that a mixture of at least two latexes of a latex of an acrylic polymer having an acid number of 20 mg to 60 mg KOH/g and a Tg of less than 35°C and at least one latex of an acrylic polymer having a Tg of more than 90°C is used as the acrylic polymer to improve suitability for high-speed printing at low temperatures, hollow polymer particles are blended in the coating liquid composition to improve thermal insulation properties of the coated layer, and silica particles having a primary particle diameter of less than 100 nm are blended in the coating liquid composition to improve the smoothness of the coated layer. However, in the case where these materials are blended into the coating liquid composition, a further decrease in the adhesive strength between the plastic sheet serving as the substrate and the coating liquid may be concerned, and no particular improvement can be expected in terms of the antistatic effect as described above.

Furthermore, in Patent Literature 5, printing sheets having high smoothness obtained by coating the smooth paper substrate surface made of cellulose fibers having a weighed fiber length average of more than 0.9 mm with a composition made by blending pigments such as calcium carbonate precipitated angonite, clay, and hollow spherical polyethylene pigments into an acrylic binder in a blended ratio of biner:pigment of 100:15 to 100:40 have been developed. However, in the case where such compositions are used, while the smoothness of the sheet can be expected to be improved, improvements in the printability of the sheet, the adhesion between the substrate and the coated layer, the antistatic properties, and the like cannot be expected.

Patent Literature 6 has disclosed an ink set including a pretreatment liquid including compounds selected from cationic organic compounds such as cationic polyacrylamide, water-soluble organic acids, water-soluble organic acid salts, and water-soluble polyvalent metal salt compounds and an ink including pigments and resin particles. Patent Literature 6 also has disclosed an embodiment in which the above pretreatment liquid is applied onto a substrate prior to ink application. However, such a pretreatment liquid has high polarity due to the cationic compounds and the salts and thus a problem of poor adhesion to the substrate is likely to arise.

### Citation List

### Patent Literature

Patent Literature 1: WO 2014/109267
Patent Literature 2: Japanese Examined Patent Application No. H7-20739
Patent Literature 3: Japanese Patent Application Laid-open No. 2015-6793
Patent Literature 4: WO 2006/051092
Patent Literature 5: Published Japanese Translation of PCT International Publication for Patent Application No. 2007-520642
Patent Literature 6: Japanese Patent Application Laid-open No. 2019-6904

### Summary

### Technical Problem

The present invention has been made in view of the above circumstances and an object of the present invention is to provide an improved printing sheet and a method for producing the same. In addition, an object of the present invention is to provide a printing sheet having a coated layer for receiving ink on at least one surface of a substrate, the printing sheet having excellent printability, excellent adhesion between the substrate and the coated layer, and excellent antistatic performance and being less likely to cause paper jams or other troubles during printing, and to provide a method for producing the same.

### Solution to Problem

The inventors of the present invention have intensively studied to solve poor adhesion between the substrate and the coated layer due to the non-polarity of a substrate resin such as polypropylene and polyethylene and troubles such as paper jams at a printing process caused by electrostatic charge due to high surface resistivity, which are problems of conventional printing sheets having the coated layer formed of acrylic polymers. As a result, the inventors of the present invention have found that blending a predetermined amount of silicone-based surfactant in a continuous phase made of an acrylic polymer allows the adhesion between the substrate and the coated layer to be increased, the printability to be improved, and in addition the antistatic performance to be improved by lowering the surface resistivity.

In other words, the presence of the predetermined amount of the silicone-based surfactant in the continuous phase made of the acrylic polymer in the coated layer allows poor adhesion caused by differences in polarity to the substrate to be reduced. The surface of the coated layer is also modified and excellent printability and an excellent antistatic effect can be obtained.

Thus, the inventors of the present invention have achieved the present invention based on this finding.

In other words, the present invention for solving the above problems provides a printing sheet comprising a coated layer including an acrylic polymer on one surface or both surfaces of a substrate, in which a silicone-based surfactant is blended in a ratio of 0.10% by mass or more and 1.00% by mass or less relative to 100% by mass of the acrylic polymer in a continuous phase made of the acrylic polymer.

An aspect of the printing sheet according to the present invention represents the printing sheet, in which the silicone-based surfactant is a polyether-modified silicone.

An aspect of the printing sheet according to the present invention represents the printing sheet, in which the polyether-modified silicone has a structure represented by General Formula (I): 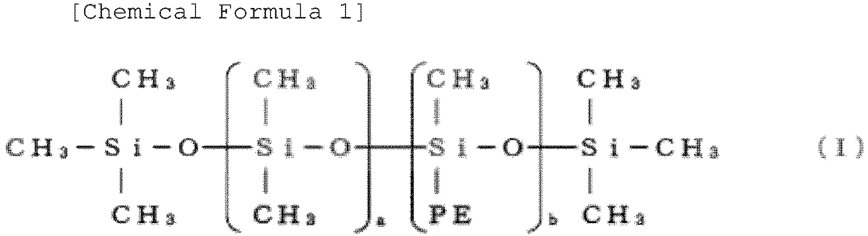 (in Formula (I), EG is a polyether group represented by -(C₂H₄O)_{c}(C₃H₆O)_{d}R; a represents an integer of 0 to 23; b represents an integer of 1 to 10; c represents an integer of 1 to 23; d represents an integer of 0 to 24; and R represents a hydrogen atom or an alkyl group having a carbon number of 1 to 4).

An aspect of the printing sheet according to the present invention represents the printing sheet, in which the acrylic polymer is an emulsion polymerization product of a radical polymerizable monomer of (meth)acrylic acid and/or a (meth)acrylic acid ester.

An aspect of the printing sheet according to the present invention represents the printing sheet, in which the radical polymerizable monomer is one or two or more monomers selected from the group consisting of acrylic acid, methacrylic acid, methyl acrylate, ethyl acrylate, n-butyl acrylate, hydroxyethyl acrylate, 2-ethylhexyl acrylate, methyl methacrylate, ethyl methacrylate, n-butyl methacrylate, and hydroxyethyl methacrylate.

An aspect of the printing sheet according to the present invention represents the printing sheet, in which the substrate is a substrate comprising a polyolefin-based resin and an inorganic substance powder in a ratio of 50:50 to 10:90 in a mass ratio.

An aspect of the printing sheet according to the present invention represents the printing sheet, in which the inorganic substance powder is a calcium carbonate powder.

An aspect of the printing sheet according to the present invention represents the printing sheet, in which the calcium carbonate powder is a heavy calcium carbonate powder.

The present invention for solving the above problems provides a method for producing a printing sheet, the method comprising applying an aqueous acrylic polymer emulsion made by blending a silicone-based surfactant in a ratio of 0.10% by mass or more and 1.00% by mass or less relative to 100% by mass of an acrylic polymer to one surface or both surfaces of a substrate.

An aspect of the method for producing a printing sheet according to the present invention represents the method for producing a printing sheet, in which a substrate comprising a polyolefin resin and an inorganic substance powder in a mass ratio of 50:50 to 10:90 in a mass ratio is molded into a sheet by extrusion; and the aqueous acrylic polymer emulsion is applied to one surface or both surfaces of the substrate sheet.

The preferable aspects of the present invention also incorporate the following inventions.
(1) A printing sheet comprising
   a coated layer including an acrylic polymer on one surface or both surfaces of a substrate, in which
   a silicone-based surfactant is blended in a ratio of 0.10% by mass or more and 1.00% by mass or less relative to 100% by mass of the acrylic polymer in a continuous phase made of the acrylic polymer,
   the substrate comprises polypropylene and/or polyethylene,
   the acrylic polymer is an emulsion polymerization product, and
   the silicone-based surfactant is a polyether-modified silicone.
(2) The printing sheet according to (1), in which the polyether-modified silicone has a structure represented by General Formula (I): 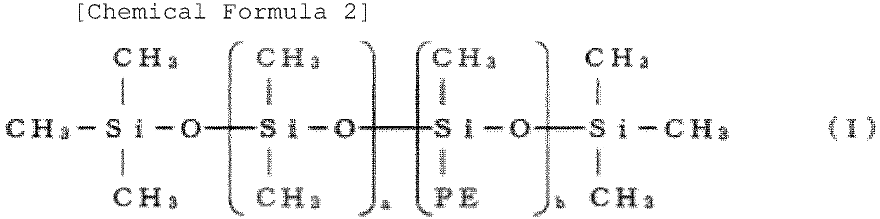 (in Formula (I), EG is a polyether group represented by -(C₂H₄O)_{c}(C₃H₆O)_{d}R; a represents an integer of 0 to 23; b represents an integer of 1 to 10; c represents an integer of 1 to 23; d represents an integer of 0 to 24; and R represents a hydrogen atom or an alkyl group having a carbon number of 1 to 4).
(3) The printing sheet according to (1) or (2), in which the acrylic polymer is an emulsion polymerization product of a radical polymerizable monomer of (meth)acrylic acid and/or a (meth)acrylic acid ester.
(4) The printing sheet according to (3), in which the radical polymerizable monomer is one or two or more monomers selected from the group consisting of acrylic acid, methacrylic acid, methyl acrylate, ethyl acrylate, n-butyl acrylate, hydroxyethyl acrylate, 2-ethylhexyl acrylate, methyl methacrylate, ethyl methacrylate, n-butyl methacrylate, and hydroxyethyl methacrylate.
(5) The printing sheet according to any one of (1) to (4), in which the substrate is a substrate comprising a polyolefin-based resin and an inorganic substance powder in a ratio of 50:50 to 10:90 in a mass ratio.
(6) The printing sheet according to (5), in which the inorganic substance powder is a calcium carbonate powder.
(7) The printing sheet according to (6), in which the calcium carbonate powder is a heavy calcium carbonate powder.
(8) A method for producing a printing sheet, the method comprising
   a step of applying an aqueous acrylic polymer emulsion made by blending a silicone-based surfactant in a ratio of 0.10% by mass or more and 1.00% by mass or less relative to 100% by mass of an acrylic polymer to one surface or both surfaces of a substrate, in which
   the substrate comprises polypropylene and/or polyethylene,
   the acrylic polymer is an emulsion polymerization product, and
   the silicone-based surfactant is a polyether-modified silicone.
(9) The method for producing a printing sheet according to (8), in which a substrate comprising a polyolefin resin and an inorganic substance powder in a mass ratio of 50:50 to 10:90 in a mass ratio is molded into a sheet by extrusion, and the aqueous acrylic polymer emulsion is applied to one surface or both surfaces of the substrate sheet.

### Advantageous Effects of Invention

According to the present invention, provided is a printing sheet having a coated layer for receiving ink on at least one surface of a substrate, the printing sheet having excellent printability and excellent adhesion between the substrate and the coated layer. The printing sheet according to the present invention also has excellent antistatic performance, is less likely to cause paper jams and other troubles during printing, has excellent properties such as water resistance and weather resistance, and has an advantage of being less likely to cause problems such as yellowing. The printing sheet according to the present invention is also less likely to cause ink repulsion and has excellent quick-drying of inks, and thus serves as a printing sheet particularly suitable for, for example, inkjet printing, LBP printing, oil-based offset printing, and UV offset printing.

### Description of Embodiments

Hereinafter, the present invention will be described in detail with reference to an embodiment.

### <<Printing sheet>>

The printing sheet according to the present invention includes a sheet-shaped substrate and a coated layer including the acrylic polymer formed on at least one surface of the substrate. This coated layer includes a composition made by blending a silicone-based surfactant in a ratio of 0.10 % by mass or more and 1.00% by mass or less relative to 100% by mass of the acrylic polymer in a continuous phase made of the acrylic polymer.

In the printing sheet according to the present invention, other constitutions are not particularly limited as long as the sheet has a form having the above coated layer on at least one surface of the substrate. The printing sheet may be arbitrarily provided with an intermediate layer having a certain function, for example, a sealant layer for improving adhesiveness between the substrate and the coated layer, an internal printing layer for providing coloring and patterns to the printing sheet, and a shielding layer between the substrate and the coated layer; a protection layer, an adhesion layer, and other layers on the surface of the substrate where the coated layer is not provided; or further a protection layer and other layers on the surface of the coated layer.

### <(1) Substrate>

The material of the substrate in the printing sheet according to the present invention is not particularly limited and may be constituted of plastic sheets made of resin-based materials as the main components, may be constituted of paper-based materials, or may be constituted of synthetic paper. Furthermore, as the substrate, use of a sheet made of an inorganic substance powder-blended thermoplastic plastic made by highly blending an inorganic substance powder into a thermoplastic plastic, in particular, a sheet made of the inorganic substance powder-blended thermoplastic plastic including a polyolefin-based resin and the inorganic substance powder in a mass ratio of 50:50 to 10:90 is preferable from the viewpoint of environmental preservation and improvement in properties such as mechanical strength and heat resistance.

### (Resin component)

The resins constituting the plastic sheet or the inorganic substance powder-blended thermoplastic plastic sheet are not particularly limited and various types of the resins may be used depending on the application, function, and the like of the printing sheet. Examples of the resin include polyolefin-based resins such as polyethylene-based resins, polypropylene-based resins, poly(methyl-1-pentene), and ethylene-cyclic olefin copolymers; functional group-containing polyolefin resins such as ethylene-vinyl acetate copolymers, ethylene-acrylic acid copolymers, ethylene-methacrylic acid copolymers, metal salts of ethylene-methacrylic acid copolymers (ionomers), ethylene-acrylic acid alkyl ester copolymers, ethylene-methacrylic acid alkyl ester copolymers, maleic acid-modified polyethylene, and maleic acid-modified polypropylene; polyamide-based resins such as nylon-6, nylon-6,6, nylon-6,10, and nylon-6,12; thermoplastic polyester resins such as aromatic polyester-based resins including polyethylene terephthalate and copolymers thereof, polyethylene naphthalate, and polybutylene terephthalate, and aliphatic polyester-based resins including polybutylene succinate and polylactic acid; polycarbonate resins such as aromatic polycarbonates and aliphatic polycarbonates; polystyrene-based resins such as atactic polystyrene, syndiotactic polystyrene, acrylonitrile-styrene (AS) copolymers, and acrylonitrile-butadiene-styrene (ABS) copolymers; polyvinyl chloride-based resins such as polyvinyl chloride and polyvinylidene chloride; polyphenylene sulfide; and polyether-based resins such as polyethersulphone, polyetherketone, and polyetheretherketone. These resins may be used singly or in combination of two or more of these resins.

Of these thermoplastic resins, the polyolefin-based resins, the aromatic polyester-based resins, and the aliphatic polyester-based resins are preferably used from the viewpoint of ease of molding, performance aspects, economic aspects, and the like of the thermoplastic resins.

Here, the polyolefin-based resins refer to polyolefin-based resins in which an olefin component unit serves as a main component. Specific examples of the polyolefin-based resins include the polypropylene-based resins and the polyethylene-based resins as described above, in addition, polymethyl-1-pentene and ethylene-cyclic olefin copolymers, as well as mixtures of two or more of these resins. The term "serves as a main component" means that 50% by mass or more of the olefin component unit is contained in the polyolefin-based resin. The content is preferably 75% by mass or more, more preferably 85% by mass or more, and further preferably 90% by mass or more. The method for producing the polyolefin-based resin used in the present invention is not particularly limited. The polyolefin-based resin may be obtained by any of the methods using a Ziegler-Natta catalyst, a metallocene catalyst, oxygen, a radical initiator such as peroxide, and the like.

Examples of the polypropylene-based resin include resins including a propylene component unit of 50% by mass or more. Examples of the resin include propylene homopolymers or copolymers of propylene and other α-olefins copolymerizable with propylene. Examples of the other α-olefins that can be copolymerized with propylene include α-olefins having a carbon number of 4 to 10 such as ethylene, 1-butene, isobutylene, 1-pentene, 3-methyl-1-butene, 1-hexene, 3,4-dimethyl-1-butene, 1-heptene, and 3-methyl-1-hexene. As the propylene homopolymers, any of isotactic polypropylene, syndiotactic polypropylene, atactic polypropylene, hemiisotactic polypropylene, and linear or branched polypropylene exhibiting various stereoregularities are included. The copolymer may be a random copolymer or a block copolymer and may be not only a binary copolymer but also a ternary copolymer. Specific examples thereof include an ethylene-propylene random copolymer, a butene-1-propylene random copolymer, an ethylene-butene-1-propylene random ternary copolymer, and an ethylene-propylene block copolymer.

Examples of the polyethylene-based resin include resins having an ethylene component unit of 50% by mass or more. Examples of the polyethylene-based resin include high-density polyethylene (HDPE), low-density polyethylene (LDPE), medium-density polyethylene, linear low-density polyethylene (LLDPE), an ethylene-vinyl acetate copolymer, an ethylene-propylene copolymer, an ethylene-propylene-butene-1 copolymer, an ethylene-butene-1 copolymer, an ethylene-hexene-1 copolymer, an ethylene-4-methylpentene-1 copolymer, an ethylene-octene-1 copolymer, and a mixture of two or more of these resins.

Of the polyolefin-based resins described above, the polypropylene-based resin is preferably used because the polypropylene-based resin has particularly excellent balance between mechanical strength and heat resistance.

From the viewpoint that the effect of the present invention is easily achieved, the resin component constituting the substrate preferably includes polypropylene and/or polyethylene and more preferably is made of polypropylene and/or polyethylene alone.

### (Inorganic substance powder)

As described above, the inorganic substance power that may be blended in the sheet in the case where the substrate is the inorganic substance powder-blended thermoplastic plastic sheet is not particularly limited. Examples thereof include powdery carbonates, sulfates, silicates, phosphates, borates, oxides, or hydrates of calcium, magnesium, aluminum, titanium, iron, zinc, and the like. Specifically, calcium carbonate, magnesium carbonate, zinc oxide, titanium oxide, silica, alumina, clay, talc, kaolin, aluminum hydroxide, magnesium hydroxide, aluminum silicate, magnesium silicate, calcium silicate, aluminum sulfate, magnesium sulfate, calcium sulfate, magnesium phosphate, barium sulfate, silica sand, carbon black, zeolite, molybdenum, diatomaceous earth, sericite, shirasu, calcium sulfite, sodium sulfate, potassium titanate, bentonite, and graphite are exemplified. These inorganic substance powders may be synthetic products or products originated from natural minerals and may be used singly or in combination of two or more of these inorganic substance powders.

In addition, the shape of the inorganic substance powder is not particularly limited and may be in the form of any of particles, flakes, granules, fibers, and the like. The particle shape may be a spherical shape as is generally obtained by synthetic methods, or an irregular shape as is obtained by grinding natural minerals.

Preferable examples of these inorganic substance powders include calcium carbonate, magnesium carbonate, zinc oxide, titanium oxide, silica, alumina, clay, talc, kaolin, aluminum hydroxide, and magnesium hydroxide. Calcium carbonate powder is particularly preferable. As calcium carbonate, both of what is called light calcium carbonate prepared by a synthesis method and what is called heavy calcium carbonate obtained by mechanically grinding and classifying natural raw materials including CaCOs as the main component such as limestone may be used and the combination thereof may also be used. From the economic viewpoint, heavy calcium carbonate powder is preferable.

Here, heavy calcium carbonate is a product obtained by mechanically grinding and processing natural limestone or the like and is clearly distinguished from synthetic calcium carbonate produced by chemical precipitate reaction or the like. The grinding method includes a dry method and a wet method. From the viewpoint of economic efficiency, the dry method is preferable.

In order to improve the dispersibility or reactivity of the inorganic substance powder, the surface of the inorganic substance powder may be previously modified in accordance with a common method. Examples of the surface modification method include physical methods such as plasma treatment and a method in which the surface is subjected to chemical surface treatment with a coupling agent or a surfactant. Examples of the coupling agent include a silane coupling agent and a titanium coupling agent. As the surfactant, any of an anionic surfactant, a cationic surfactant, a nonionic surfactant, and an amphoteric surfactant may be used. Examples of the surfactant include higher fatty acids, higher fatty acid esters, higher fatty acid amides, and higher fatty acid salts.

The inorganic substance powder is preferably particles. The average particle diameter of the inorganic substance powder is preferably 0.1 µm or more and 50.0 µm or less, more preferably 1.0 um or more and 10.0 um or less, and further preferably 1.0 um or more and 5.0 µm or less. Unless otherwise noted, the average particle diameter of the inorganic substance powder described in the present specification refers to a value calculated from the measurement result of the specific surface area by the air permeation method in accordance with JIS M-8511. As a measurement apparatus, for example, a specific surface area measurement apparatus Type SS-100 manufactured by SHIMADZU CORPORATION may be preferably used. In particular, in the particle diameter distribution of the inorganic substance powder, particles having a particle diameter of more than 50.0 um are preferably excluded. On the other hand, excessively fine particles cause the viscosity at the time of kneading with the thermoplastic resin described above to significantly increase and thus production of the molded products may be difficult. Therefore, the average particle diameter of the inorganic substance powder is preferably set to 0.5 um or more.

Inorganic substance powders may be a fiber-like, powder-like, flake-like, or granule-like shape.

The average fiber length of the inorganic substance powder having a fiber-like shape is preferably 3.0 µm or more and 20.0 µm or less. The average fiber diameter is preferably 0.2 µm or more and 1.5 µm or less. The aspect ratio is usually 10 or more and 30 or less. The average fiber length and average fiber diameter of the inorganic substance powder having the fiber-like shape are measured by an electron microscope and the aspect ratio is a ratio of the average fiber length relative to the average fiber diameter (Average fiber length/Average fiber diameter).

In the case where the substrate is the inorganic substance powder-blended thermoplastic plastic sheet as described above, the blend ratio (% by mass) of the thermoplastic resin and the inorganic substance powder included in the inorganic substance powder-blended thermoplastic plastic sheet is desirably in a ratio of 50:50 to 10:90, more preferably in a ratio of 40:60 to 20:80, and further preferably in a ratio of 40:60 to 25:75. This is because, in the blend ratio of the thermoplastic resin and the inorganic substance powder, a ratio of the inorganic substance powder of less than 50% by mass causes the specified texture and physical properties such as impact resistance of an inorganic powder-blended thermoplastic resin composition due to blend of the inorganic substance powder not to be obtained, whereas a ratio of the inorganic substance powder of more than 90% by mass causes molding processing by, for example, extrusion molding and vacuum molding to be difficult.

### (Other additives)

In the case where the substrate is the plastic sheet or the inorganic substance powder-blended thermoplastic plastic sheet, other additives can be blended in the composition as auxiliary agents, if necessary. Examples of the other additives include plasticizers, colorants, lubricants, coupling agents, fluidity improvers, dispersing agents, antioxidants, ultraviolet ray absorbers, flame retardants, stabilizers, antistatic agents, and foaming agents. These additives may be used singly or in combination of two or more of these additives.

### (Paper-based material)

Specific examples in the cases where the substrate is constituted of paper-based materials include paper substrates such as glassine paper, coated paper, fine paper, dust-free paper, and impregnated paper, and laminated paper in which a thermoplastic resin such as polyethylene is laminated to the above paper substrates.

### (Substrate composition)

The substrate may be constituted of a single layer sheet constituted of the materials described above or may be constituted by laminating a plurality of layers. In the case where the substrate is the plastic sheet or the inorganic substance powder-blended thermoplastic plastic sheet, the sheet may be unstretched or stretched in a uniaxial or biaxial direction such as a longitudinal or transverse direction.

The thickness of the substrate is not particularly limited and is usually 10 um or more and 500 µm or less, preferably 25 µm or more and 300 µm or less, more preferably 50 um or more and 250 µm or less, and particularly preferably 100 um or more and 220 um or less.

In the case where the substrate made of the plastic sheet or the inorganic substance powder-blended thermoplastic plastic sheet is used, surface treatment such as oxidation methods and methods for forming surface unevenness can be applied to one surface or both surfaces in order to improve adhesiveness to the coated layer provided on the surface of the substrate. The oxidation methods include corona discharge treatment, flame treatment, plasma treatment, glow discharge treatment, chromic acid treatment (wet method), flame treatment, hot air treatment, and ozone and ultraviolet irradiation treatment. The methods for forming surface unevenness include sandblasting methods and solvent treatment methods. Primer treatment may also be applied.

### <(2) Coated layer>

The coated layer that the printing sheet according to the present invention has may be provided on only one surface of the substrate or may be provided on both surfaces of the substrate. For example, in a sheet for double-sided printing, the coated layers are provided on both sides of the substrate. On the other hand, a sheet printed on only one side is preferable from the viewport of cost because the coated layer is provided on only one side of the substrate. Single-sided coating is also possible to be employed in order to take advantage of the texture of the paper substrate and the like.

The thickness of the coated layer is not particularly limited. The thickness is preferably 1 µm or more and 50 um or less, more preferably 2 µm or more and 40 µm or less, and particularly preferably 3 µm or more and 30 µm or less. The thickness within this range allows the coated layer to sufficiently function as the ink receiving layer, the ink receiving properties such as excellent colorability and color development to be exhibited, and properties of the printing sheet such as the water resistance, the antistatic properties of the surface, and the adhesiveness to inks to be excellent. From the viewpoint of adhesiveness to inks, the thickness is preferably thicker, for example, 10 um or more and 40 µm or less, and particularly preferably 20 um or more and 30 µm or less. On the other hand, for the purpose of taking the advantage of the texture of the substrate and in consideration of cost, the thickness can be thinner, for example, 1 µm or more and 10 µm or less, further preferably 2 um or more and 8 µm or less, and particularly preferably 3 um or more and 5 µm or less.

The ratio of the thickness of the coated layer to the thickness of the substrate is also not particularly limited. For example, setting the thickness ratio of the coated layer:substrate to 1:100 to 2:1, particularly 1:20 to 1:1, and further particularly about 1:10 to 1:3 allows the sheet having properties such as mechanical strength and heat resistance and printability in a well-balanced manner to be formed. In the case where the coated layers are provided on both surfaces of the substrate, the thicknesses of the two coated layers may be different. For example, a coated layer having a thickness of 10 µm or more and 40 µm or less and particularly 20 µm or more and 30 um or less is provided on one surface of a substrate having a thickness of 25 um or more and 300 um or less and particularly 50 um or more and 250 µm or less, and a coated layer having a thickness of 1 um or more and 10 um or less and particularly 2 µm or more and 8 µm or less is provided on the opposite surface of the substrate to form a printing sheet having a surface excellent in printability and the opposite surface excellent in adhesion and the like. A single-sided coated printing sheet provided with only one of these coated layers can also be provided.

Thus, in the present invention, this coated layer is made by adding the silicone-based surfactant in a ratio of 0.10% by mass or more and 1.00% by mass or less relative to 100% by mass of the acrylic polymer to the continuous phase of the acrylic polymer serving as the matrix.

The presence of the silicone-based surfactant in the continuous phase made of the acrylic polymer in the coated layer in the predetermined amount described above allows the adhesion between the substrate and the coated layer to be improved, and thus the printing sheet according to the present invention is excellent in printability. The antistatic performance is also improved by the predetermined amount of the silicone-based surfactant, and thus the printing sheet according to the present invention has the advantage of being less likely to cause paper jams and other troubles during printing. The quick-drying of inks is also improved, adhesion or other troubles when sheets are stacked after printing do not occur, and offset printability is improved.

In this coated layer, an amount of the blended silicone-based surfactant of less than 0.10% by mass may result in not so much improvement in the adhesion between the substrate and the coated layer and the printability. A blended amount of more than 1.00% by mass may result in improvement in these physical properties to plateau and thus the aspect of cost and the aspect of processing tend to be disadvantageous. The amount of the blended silicone-based surfactant is preferably 0.20% by mass or more and 0.80% by mass or less, particularly preferably 0.30% by mass or more and 0.70% by mass or less, and more particularly preferably 0.40% by mass or more and 0.60% by mass or less relative to 100% by mass of the acrylic polymer.

Hereinafter, each component forming the coated layer according to the present invention will be described in detail.

### (Acrylic polymer forming continuous phase)

Acrylic polymers serving as the matrix of the coated layer include polymerized products obtained using (meth)acrylic acid, (meth)acrylic esters, (meth)acrylamides, and (meth)acrylonitrile as the main monomer components. The term "(meth)acrylic" used in the present specification is used in a sense that includes both "acrylic" and "methacrylic".

More specifically, the monomer components constituting the acrylic polymer are not particularly limited and examples thereof include one or two or more of the components selected from the group consisting of the following components:
Acrylic acid and methacrylic acid;
for example, acrylic acid alkyl esters in which the alkyl group has a carbon number of 1 to 18 such as methyl acrylate, ethyl acrylate, n-propyl acrylate, isopropyl acrylate, n-butyl acrylate, isobutyl acrylate, t-butyl acrylate, hexyl acrylate, n-octyl acrylate, 2-ethylhexyl acrylate, isooctyl acrylate, nonyl acrylate, lauryl acrylate, stearyl acrylate, palmityl acrylate, and cyclohexyl acrylate;
for example, methacrylic acid alkyl esters in which the alkyl group has a carbon number of 1 to 18 such as methyl methacrylate, ethyl methacrylate, n-propyl methacrylate, isopropyl methacrylate, n-butyl methacrylate, isobutyl methacrylate, t-butyl methacrylate, hexyl methacrylate, n-octyl methacrylate, 2-ethylhexyl methacrylate, isooctyl methacrylate, nonyl methacrylate, lauryl methacrylate, stearyl methacrylate, palmityl methacrylate, and cyclohexyl methacrylate;
for example, alkyl esters having a hydroxyl group on the side chain of (meth)acrylic acid such as 2-hydroxyethyl acrylate, 2-hydroxyethyl methacrylate, 2-hydroxypropyl acrylate, 2-hydroxypropyl methacrylate, 4-hydroxybutyl acrylate, 4-hydroxybutyl methacrylate, and monohydroxyethyl phthalate acrylate;
for example, polyethylene glycol diacrylate having ethylene glycol units in the molecule (n is desirably 3 or more and 20 or less), trimethylolpropane EO modified triacrylate (n is desirably 3 or more and 20 or less), and phenol EO modified acrylate (n is desirably 3 or more and 20 or less),
for example, alkenyloxyalkyl esters of (meth)acrylic acid such as allyloxyethyl acrylate and allyloxyethyl methacrylate, and
for example, alkyl esters having an alkoxyl group on the side chain of (meth)acrylic acid, such as methoxybutyl acrylate, methoxybutyl methacrylate, methoxyethyl acrylate, methoxyethyl methacrylate, ethoxybutyl acrylate, and ethoxybutyl methacrylate;
for example, alkenyl esters of (meth)acrylic acid such as allyl acrylate and allyl methacrylate;
for example, alkyl esters having an epoxy group on the side chain of acrylic acid such as glycidyl acrylate, glycidyl methacrylate, methylglycidyl acrylate, and methylglycidyl methacrylate;
for example, mono- or di-alkylaminoalkyl esters of (meth)acrylic acid such as diethylaminoethyl acrylate, diethylaminoethyl methacrylate, methylaminoethyl acrylate, and methylaminoethyl methacrylate;
for example, silicone-modified (meth)acrylic esters having a silyl group, an alkoxysilyl group, or a hydrolyzable alkoxysilyl group as a side chain;
for example, acrylamide and methacrylamide;
for example, (meth)acrylamides having a methylol group such as N-methylolacrylamide and N-methylolmethacrylamide;
for example, (meth)acrylamide having an alkoxymethylol group such as N-alkoxymethylolacrylamides (for example, N-isobutoxymethylolacrylamide) and N-alkoxymethylolmethacrylamides (for example, N-isobutoxymethylolmethacrylamide);
for example, (meth)acrylamide having an alkoxyalkyl group such as N-butoxymethylacrylamide and N-butoxymethylmethacrylamide; and
various acrylic monomers such as acrylonitrile and methacrylonitrile can be included as the monomer components constituting the acryl resins.

Furthermore, in the case where coating film strength of the coated layer is tried to be enhanced by introducing a crosslinking structure by photo-curing reaction or other method to the acrylic polymer, bi-functional to multi-functional acrylic monomers, specifically, multi-functional (meth)acrylates such as 1,4-butanediol di(meth)acrylate, 1,6-hexanediol di(meth)acrylate, neopentyl glycol di(meth)acrylate, the above polyethylene glycol di(meth)acrylate, hydroxypivalic acid neopentyl glycol di(meth)acrylate, dicyclopentanyl di(meth)acrylate, caprolactone-modified dicyclopentenyl di(meth)acrylate, ethylene oxide-modified phosphate di(meth)acrylate, allylated cyclohexyl di(meth)acrylate, isocyanurate di(meth)acrylate, trimethylolpropane tri(meth)acrylate, dipentaerythritol tri(meth)acrylate, propionic acid-modified dipentaerythritol tri(meth)acrylate, pentaerythritol tri(meth)acrylate, propylene oxide-modified trimethylolpropane tri(meth)acrylate, tris(acryloxyethyl) isocyanurate, pentaerythritol tetra(meth)acrylate, dipentaerythritol penta(meth)acrylate, propionic acid-modified dipentaerythritol penta(meth)acrylate, dipentaerythritol hexa(meth)acrylate, and caprolactone-modified dipentaerythritol hexa(meth)acrylate may also be blended. These monomer components can be used singly or in combination by mixing these monomers.

In one preferable aspect of the present invention, the acrylic polymer may be an emulsion polymerization product.

The acrylic polymer is more preferably the emulsion polymerization product of radical polymerizable monomers of (meth)acrylic acid and/or (meth)acrylic acid esters. In particular, the radical polymerizable monomers are preferably one or two or more of the monomers selected from the group consisting of acrylic acid, methacrylic acid, methyl acrylate, ethyl acrylate, n-butyl acrylate, hydroxyethyl acrylate, 2-ethylhexyl acrylate, methyl methacrylate, ethyl methacrylate, n-butyl methacrylate, and hydroxyethyl methacrylate. These emulsion polymerization products of these monomers have the advantages of easy formation of the coated layer and excellent printability of the obtained coated layer as described later.

The acrylic polymer constituting the continuous phase of the coated layer in the present invention may be a homopolymer made only of any one of the various monomer components exemplified above or may be a copolymer made by combining the monomer components exemplified above.

Furthermore, in one embodiment of the present invention, copolymers containing other monomer components in addition to the above monomer components can be used as the acrylic polymer.

Monomer components not exemplified above are not particularly limited as long as the monomer components form copolymers with the above monomer components. Examples of such monomer components include vinyl monomers such as vinyl acetate, vinyl chloride, vinylidene chloride, vinyl lactate, vinyl butyrate, vinyl versatate, and vinyl benzoate, ethylene, butadiene, and styrene. However, preferably, no styrene is desirably contained from the viewpoint of weather resistance of the obtained sheet.

A method for forming a coated layer on the printing sheet according to the present invention is not particularly limited. Generally, the coating liquid is desirably used in the form of being dispersed in water or being dissolved in an organic solvent from the viewpoint of coatability in forming such a coat layer. In particular, the coating liquid is desirably in the form of being dispersed in water, that is, in the form of the aqueous acrylic polymer emulsion. Therefore, the acrylic polymer is preferably in the form of the aqueous emulsion at the stage at which the acrylic polymer serves as a raw material to form the coated layer.

Emulsion polymerization itself in producing the aqueous acrylic polymer emulsion has been known to those skilled in the art. The surfactants used in the emulsion polymerization may be anionic, cationic, amphoteric, or nonionic surfactants, and can be used singly or in combination of two or more of these surfactants. Of these surfactants, nonionic and cationic surfactants are preferable. The nonionic surfactants are not particularly limited. Examples include polyoxyethylene alkyl ethers, polyoxyethylene alkylphenyl ethers, polyoxyethylene alkyl esters, sorbitan alkyl esters, and polyoxyethylene sorbitan alkyl esters. The cationic surfactants are not particularly limited. Examples include dodecyltrimethylammonium chloride, stearyltrimethylammonium chloride, and N-2-ethylhexylpyridinium chloride. The most preferable surfactants are nonionic surfactants. Of the surfactants, the polyoxyethylene alkylphenyl ethers are particularly preferable. The amount of the surfactant is not particularly limited. Usually, an amount of 1% by mass to 5% by mass relative to the total amount of the monomers is preferably used.

Furthermore, water-soluble polymers such as gelatin and polyvinyl alcohol may be used together as protective colloidal agents.

As radical polymerization initiators in the emulsion polymerization, water-soluble type initiators such as persulfates including potassium persulfate and ammonium persulfate, hydrogen peroxide, t-butyl hydroperoxide, and a hydrochloride salt of azobisamidinopropane and oil-soluble type initiators such as benzoyl peroxide, diisopropyl peroxydicarbonate, cumyl peroxyneodecanoate, cumyl peroxyoctoate, and azobisisobutyronitrile are exemplified. The water-soluble type initiators are preferable. The polymerization initiators are not particularly limited and are used, for example, in a ratio of 0.01% by mass to 0.50% by mass of the total amount of the monomers.

The polymerization reaction is not particularly limited. Usually, the reaction is performed at temperature of 35°C to 90°C while stirring. The reaction time is usually 3 hours to 40 hours. Adjusting the pH by adding a basic substance at the beginning or at the end of emulsion polymerization allows storage stability, freezing stability, chemical stability, and the like of the emulsion to be improved. In this case, the obtained emulsion is preferably adjusted so as to be a pH of 5 to 9. In order to achieve this, basic substances such as ammonia, ethylamine, diethylamine, triethylamine, ethanolamine, triethanolamine, dimethylethanolamine, caustic soda, and caustic potash can be used.

The polymerization initiator, the (non-silicone-based) surfactant, the protective colloidal agent, and the like in the acrylic polymer are acceptable even when these additives remain at the time of using the acrylic polymer as the raw materials of the coated layer in the present invention. However, the polymerization initiator is preferably inactivated or removed at the time of use.

### (Silicone-based surfactant)

In the present invention, the silicone-based surfactant is blended in a predetermined ratio in the continuous phase of the acrylic polymer serving as the matrix.

The silicone-based surfactant used in the present invention is not particularly limited and any known silicone-based surfactants can be appropriately used. Examples of the silicone-based surfactant include, but are not limited to, commercial products including 71ADDITIVE, 74ADDITIVE, 57ADDITIVE, 8029ADDITIVE, 8054ADDITIVE, 8211ADDITIVE, 8019ADDITIVE, 8526ADDITIVE, FZ-2123, and FZ-2191 (all trade names) manufactured by Dow Corning Toray Co., Ltd.; TSF4440, TSF4441, TSF4445, TSF4446, TSF4450, TSF4452, and TSF4460 (all trade names) manufactured by Momentive Performance Materials, Inc.; Silface SAG002, Silface SAG003, Silface SAG005, Silface SAG008, Silface SAG013, Silface SAG022, Silface SAG503A, and Silface SJM003 (registered trademarks) manufactured by Nissin Chemical Co., Ltd.; TEGOWetKL245, TEGOWet240, TEGOWet250, TEGOWet260, TEGOWet265, TEGOWet270, and TEGOWet280 (all trade names) manufactured by Evonik Industries AG; and BYK-345, BYK-347, BYK-348, BYK-349, BYK-375, and BYK-377 (all trade names) manufactured by BYK Japan KK.

In the present invention, however, the silicone-based surfactant is preferably a polyether-modified silicone. Blending the polyether-modified silicone allows the adhesion between the substrate and the coated layer to be remarkably improved and the printing sheet having excellent printability and less generation of mottles and the like to be provided.

The polyether-modified silicone is a siloxane compound having polyether groups on the side chains and/or the ends of the silicone chain. Examples of the polyether-modified silicone include, but are not limited to: BYK-345, BYK-347, BYK-348, and BYK-349 (all trade names) manufactured by BYK Japan KK; TEGOWet240, TEGOWet270, and TEGOWet280 (all trade names) manufactured by Evonik Industries AG; Silface SAG002, Silface SAG005, Silface SAG008, Silface SAG013, Silface SAG022, and Silface SAG503A (registered trademarks) manufactured by Nissin Chemical Co., Ltd. The type and number of polyether groups, the type and number of siloxane units in the silicone chain, the ratio of the number of polyether groups to the number of siloxane units, and the like are also not particularly limited. For example, silicones having structures in which polymethyleneoxy groups, polyethyleneoxy groups, polypropyleneoxy groups, and/or polybutyleneoxy groups are bonded to the side chains and/or ends of dimethylpolysiloxane, diphenylpolysiloxane, and methylphenylpolysiloxane can be used. The silicone chain may be partially cyclic or branched.

However, the polyether-modified silicone used in the present invention preferably has a structure in which the polyether groups are introduced into the side chains of the silicone chain. More preferably, the polyether-modified silicone has the polyether groups in the side chains of a linear dimethylpolysiloxane. Of these polyether-modified silicones, polyether-modified silicones having a structure represented by General Formula (I) below are preferable: 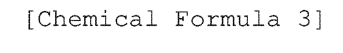 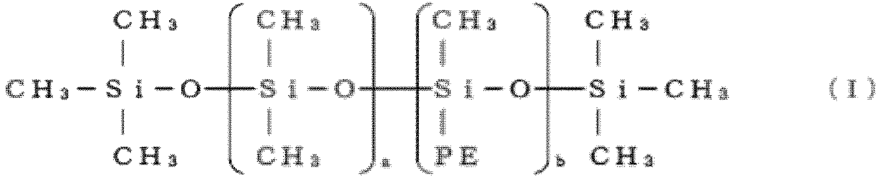 (in Formula (I), EG is a polyether group represented by -(C₂H₄O)_{c}(C₃H₆O)_{d}R; a represents an integer of 0 to 23; b represents an integer of 1 to 10; c represents an integer of 1 to 23, d represents an integer of 0 to 24; and R represents a hydrogen atom or an alkyl group having a carbon number of 1 to 4).

Using the silicone-based surfactant having the structure represented by General Formula (I) allows the printing sheet which has excellent adhesion between the substrate and the coated layer and antistatic performance as well as excellent ink adhesiveness, is less likely to generate mottles, and has excellent printability to be provided. A polyether-modified silicone having a low SP value, for example, a structure having a small b/a ratio in General Formula (I) of (1 to 5)/(10 to 23) and particularly (1 to 3)/(15 to 23) or a structure having a small c+d value in the EG group of 15 or less and particularly 10 or less, is particularly preferably used. Using such a polyether-modified silicone having relatively low polarity allows the printing sheet having an excellent ink-receiving property particularly when oil-based inks are used and excellent dot shape after printing to be provided.

In the present invention, the coated layer may include other components in addition to the additives described above. Specific examples of the additives include cross-linking agents, pH adjusters, thickeners, flow modifiers, defoamers, antifoamers, non-silicone-based surfactants, mold release agents, penetrating agents, inorganic substance powders such as calcium carbonate, talc, and clay, coloring pigments, coloring dyes, fluorescent whitening agents, ultraviolet ray absorbers, antioxidants, antiseptic agents, mold inhibitors, water proofing agents, ink fixing agents, curing agents, and weather resistant materials. As the inorganic substance powders, the types of inorganic substance powders previously exemplified as the raw material for the substrate may be used. Here, the inorganic substance powder in the coated layer preferably has a volume average particle diameter of 0.05 um or more and 2.00 um or less and particularly preferably 0.07 um or more and 1.50 um or less. The inorganic substance powder having a particle diameter within this range allows the smoothness of the coated layer and the glossiness of the sheet to be improved.

Examples of the cross-linking agents include aldehyde-based compounds, melamine-based compounds, isocyanate-based compounds, zirconium-based compounds, titanium-based compounds, amide-based compounds, aluminum-based compounds, boric acid, borates, carbodiimide-based compounds, and oxazoline-based compounds.

Cationic resins other than the acrylic resin and polyvalent metal salts are preferably included as the ink fixing agents. Examples of the cationic resins include polyethyleneimine-based resins, polyamine-based resins, polyamide-based resins, polyamide-epichlorohydrin-based resins, polyamine-epichlorohydrin-based resins, polyamide-polyamine-epichlorohydrin based resins, polydiallylamine-based resins, and dicyandiamide condensation products. Examples of the polyvalent metal salts include calcium compounds, magnesium compounds, zirconium compounds, titanium compounds, and aluminum compounds. Of these compound, the calcium compounds are preferable and calcium nitrate tetrahydrate is more preferable.

The defoamers are not particularly limited. For example, mineral oil-based defoamers, polyether-based defoamers, and silicone-based defoamers are used and preferable defoamers are the mineral oil-based defoamers. Examples of hydrophobic silica-type mineral oil-based defoamers include, but are not limited to, Nopco 8034, Nopco 8034-L, SN Deformer AP, SN Deformer H-2, SN Deformer TP-33, SN Deformer VL, SN Deformer 113, SN Deformer 154, SN Deformer 154S, SN Deformer 313, SN Deformer 314, SN Deformer 316, SN Deformer 317, SN Deformer 318, SN Deformer 319, SN Deformer 321, SN Deformer 323, SN Deformer 364, SN Deformer 414, SN Deformer 456, SN Deformer 474, SN Deformer 476-L, SN Deformer 480, SN Deformer 777, SN Deformer 1341, and SN Deformer 1361 (manufactured by SAN NOPCO LIMITED), and BYK-1740 (manufactured by BYK-Chemie GmbH). Examples of metal soap-type mineral oil-based defoamers include, but are not limited to, Nopco DF-122, Nopco DF-122-NS, Nopco NDW, Nopco NXZ, SN Deformer 122-SV, SN Deformer 269, and SN Deformer 1010 (manufactured by SAN NOPCO LIMITED). Examples of amide wax-type mineral oil-based defoamers include, but are not limited to, Nopco 267-A, Nopco DF-124-L, SN Deformer TP-39, SN Deformer 477T, SN Deformer 477-NS, SN Deformer 479, SN Deformer 1044, SN Deformer 1320, SN Deformer 1340, SN Deformer 1360, and SN Deformer 5100 (manufactured by SAN NOPCO LIMITED). These defoamers may be used singly or in combination of two or more of these defoamers. The amount of used defoamer is not particularly limited and is desirably 0.01% by mass to 0.03% by mass relative to the entire coating liquid forming the coated layer.

For example, in the case where an aqueous acrylic polymer emulsion is used as the acrylic polymer serving as the matrix of the coated layer, the coating liquid for forming the coated layer can be prepared by adding the silicone-based surfactant or a solution or dispersion thereof in water or the like and other arbitrary components into water serving as the dispersing medium of the aqueous acrylic polymer emulsion, and stirring or dispersing these materials. The stirring can be performed, for example, by dispersing the materials using a wet colloid mill, an edged turbine, a paddle blade, or the like under rotational conditions of 500 rpm to 5,000 rpm for usually 1 minute to 5 minutes.

### <<Method for producing printing sheet>>

As a method for producing a printing sheet according to the present invention, known methods for forming a coated layer on the surface of a substrate can be used. The methods can be performed by, for example, applying the aqueous acrylic polymer emulsion made by blending the silicone-based surfactant in a ratio of 0.10% by mass or more and 1.00% by mass or less relative to 100% by mass of the acrylic polymer in a dried mass to one surface or both surfaces of the substrate. The applying method is not particularly limited and appropriate methods such as roll coating, blade coating, bar coating, brush coating, spray coating, and dipping can be used. Thereafter, the coated layer may be dried and cured. The temperature conditions during drying or curing the coated layer are not particularly limited and the drying or curing may be performed, for example, at a temperature of 90°C to 120°C.

In an aspect of using a sheet made of the above inorganic substance powder-blended thermoplastic plastic, for example, the printing sheet can be produced by molding a substrate including the polyolefin resin and the inorganic substance powder in a mass ratio of 50:50 to 10:90 into a sheet by extrusion, subjecting the sheet to stretching treatment if necessary, and applying the aqueous acrylic polymer emulsion to one surface or both surfaces of the substrate sheet. As the mixing of the inorganic substance powder and the polyolefin resin in forming the sheet made of the inorganic substance powder-blended thermoplastic plastic, the polyolefin resin and the inorganic substance powder may be kneaded and melted before the materials are fed into the molding machine from the hopper, or kneading and melting of the polyolefin resin and the inorganic substance powder may be simultaneously performed with molding performed by the molding machine. The same is true for other additives other than the inorganic substance powder. In melting and kneading, the inorganic substance powder is preferably uniformly dispersed in the polyolefin resin and, at the same time, the mixture is preferably kneaded by applying high shear stress. For example, the mixture is preferably kneaded using a twin-screw kneader. When the inorganic substance powder is blended with the polyolefin resin, as the temperature becomes higher, an odor is more likely to be generated. Therefore, an aspect in which the treatment is performed at a temperature of the melting point of the polyolefin resin +55°C or less, preferably a temperature equal to the melting point of the polyolefin resin or more and the melting point of the polyolefin resin +55°C or less, and more preferably at a temperature of the melting point of the polyolefin resin +10°C or more and at a temperature of the melting point of the thermoplastic resin +45°C or less, is desirable.

A similar temperature is preferably used for the molding temperature when the inorganic substance powder-blended thermoplastic plastic is molded into a sheet by extrusion.

Furthermore, the extruded product may be subjected to the stretching treatment when molded into a sheet. The stretching treatment is not particularly limited. The extruded product can be stretched in a uniaxial direction, a biaxial direction, or a multiaxial direction (stretching by, for example, a tubular method) at the time of or after the molding. In the case of the biaxial stretching, the stretching may be either sequential biaxial stretching or simultaneous biaxial stretching.

Stretching (for example, longitudinal and/or transverse stretching) the sheet after molding allows the density of the sheet to decrease. The decrease in the density may results in improved whiteness of the sheet in some cases.

### Examples

Hereinafter, the present invention will be described more specifically with reference to Examples. These Examples are described only for the purpose of exemplifying specific aspects and embodiments in order to facilitate the understanding of the concept and scope of the present invention disclosed in the present specification and described in the appended claims. The present invention, however, is not limited to these Examples.

### (Evaluation methods)

Each physical property values described in the following Examples and Comparative Examples were evaluated by the following methods.

### (Adhesion)

In order to examine adhesiveness of a coated layer to a substrate, a peel-off test using cellophane adhesive tape was performed.

### - Tape for measurement

Cellophane adhesive tape (width: 24 mm) in accordance with JIS Z1522:2009

### - Measurement Procedure

(1) Take out the tape having a length of about 75 mm.
(2) Stick the tape on a sheet to be measured and rub the tape with a finger so that the tape appears transparent. In this case, the tape is pressed with the flat part of the finger without pressing with a fingernail.
(3) Within 5 minutes after sticking the tape, lift up the edge of the tape so that the direction of peeling and the coated layer form an angle of approximately 60°, and surely peel the tape within 0.5 second to 1.0 second. The peeled surface was observed and whether the coated layer is attached to the substrate was visually observed. The adhesiveness between the coated layer and the substrate was evaluated in accordance with the following evaluation criteria.

### - Evaluation Criteria

o No peeling of the coated layer occurs.
Δ The peeling of the coated layer is less than 200.
× The peeling of the coated layer is 200 or more.

### (Surface resistivity)

Surface resistivity was measured in accordance with JIS K 6911:2006. For the measurement, 100-mm square sheets were used as the samples and measurement was performed under the following conditions.
Temperature: 23°C and humidity: 500

### (Printability)

In order to evaluate printability of printing sheets, solid images were printed on each sheet using an oil-based ink with an inkjet printer (EPSON S80650). The presence or absence of ink repellency and mottles was visually observed and evaluated in accordance with the following evaluation criteria. In addition, the printed product after the evaluation was wound using a roll having a diameter of 200 mm and allowed to stand for one night. Drying properties of the ink were evaluated based on the presence or absence of stickiness.

### - Evaluation Criteria - Ink Adhesiveness: Ink Repellency

o Each dot in the image is nearly printed and no bleeding and misalignment in printing occur.
Δ Although each dot in the image was printed well, slight bleeding and misalignment in printing occurred.
× Each dot in the image was not printed well and significant bleeding and misalignment in printing were apparently observed.

### - Evaluation Criteria - Mottles

o Mottles were scarcely observed.
× Mottles were observed in some areas.
- Evaluation Criteria - Dot Shape
∘ Small dots are printed densely and neatly.
Δ Hollow (doughnut-shaped) dots were observed in some areas.
× A large number of hollow (doughnut-shaped) dots were observed.
- Evaluation Criteria - Drying Properties
o No stickiness was observed in the wound printed product.
× Stickiness was observed in the wound printed product.

### (Materials)

Components each used in Examples and Comparative Examples described later are as follows.

### - Substrate

36.0 parts by mass of a polypropylene homopolymer (melting point: 160°C), 60.0 parts by mass of heavy calcium carbonate particles, as an inorganic substance powder, having an average particle diameter of 2.2 µm (average particle diameter based on the air permeability method in accordance with JIS M-1511), and further 2.0 parts by mass of sodium alkanesulfonate (carbon number of alkyl group (average value) = 12) as a lubricant were charged into an extruder equipped with a twin screw (T die-type extrusion molding apparatus, screw diameter of 20 mm, L/D = 25). The mixture was kneaded at a temperature of 220°C or less and the kneaded raw material was formed into a sheet with a T die at a molding temperature of 220°C to prepare a sheet made of an inorganic substance powder-blended thermoplastic plastic. The thickness of the sheet thus obtained was 200 µm.

### - Aqueous acrylic polymer emulsions

M1: An aqueous emulsion (solid content:water = 50:50 (mass ratio)) of a (meth)acrylic acid alkyl ester copolymer made of n-butyl acrylate, methyl methacrylate, 2-ethylhexyl acrylate, methacrylic acid, vinyl acetate, and a rosin derivative contained in a mass ratio of 26.0:16.0:44.0:8.0:6.0:3.0
M2: An aqueous emulsion (solid content:water = 20:80 (mass ratio)) of a styrene-acrylic acid ester copolymer made of 2-ethylhexyl acrylate, benzyl acrylate, butyl acrylate, 1,6-hexanediol dimethacrylate, and 2-hydroxyethyl methacrylate contained in a mass ratio of 84.0:26.0:32.0:0.1:0.9

### - Surfactants

S1: Silicone-based surfactant of General Formula (1) (Silface (registered trademark) SAG503A manufactured by Nissin Chemical Co., Ltd.), relatively high solvent SP value
S2: Silicone-based surfactant of General Formula (1) (Silface (registered trademark) SAG005 manufactured by Nissin Chemical Co., Ltd.), relatively low solvent SP value
S3: Silicone-based surfactant of General Formula (1) (Silface (registered trademark) SAG008 manufactured by Nissin Chemical Co., Ltd.), relatively low solvent SP value
S4: Silicone-based surfactant of General Formula (1) (Silface (registered trademark) SAG002 manufactured by Nissin Chemical Co., Ltd.), relatively high solvent SP value
S5: Silicone-based surfactant (SN Wet 126 (trade name) manufactured by SAN NOPCO LIMITED)
S6: Amine-based surfactant (SN Wet S (trade name) manufactured by SAN NOPCO LIMITED)
S7: Anionic surfactant (Nopcosparse 092 (registered trademark) manufactured by SAN NOPCO LIMITED)

### [Examples 1 to 5 and Comparative Examples 1 and 3]

200 parts by mass of an aqueous acrylic polymer emulsion M1, 0.5 parts by mass of various surfactants, 0.05 parts by mass of a defoamer (SN Deformer 777 (trade name) manufactured by SAN NOPCO LIMITED), and 50 parts by mass of purified water were stirred and mixed using an edged turbine at 3,000 rpm for 3 minutes to prepare a coated layer coating liquid. All amounts of the blended surfactants are 0.5% by mass relative to 100% by mass of the acrylic polymer (solid content).

The coated layer coating liquid prepared as described above was applied to one surface of the substrate using a micro-gravure method so as to achieve a film thickness of 25 µm and dried at 110°C to prepare a printing sheet. For each obtained printing sheet, the adhesion, the surface resistivity, the ink repellency, the mottles, the dot shape, and the drying properties were measured under the conditions described above. The obtained results are listed in Table 1.

**[Table 1]**

| Table 1 Types of surfactants and evaluation results of printing sheets | | | | | | | | | |
|---|---|---|---|---|---|---|---|---|---|
| Example^{®} | | C1 | Ex1 | Ex2 | Ex3 | Ex4 | Ex5 | C2 | C3 |
| Surfactant* (structure) | | None | S1 (Formula 1) | S2 (Formula 1) | S3 (Formula 1) | S4 (Formula 1) | S5 (Si) | S6 (Amine-based) | S7 (Anionic) |
| Evaluation result | Adhesion | Δ | ○ | ○ | ○ | ○ | ○ | ○ | × |
| | Resistivity* | 8.7E+14 | 4.7E+13 | 4.2E+13 | 4.3E+13 | 4.9E+13 | 5.4E+13 | 9.3E+13 | 9.9E+13 |
| | Ink repellency | × | ○ | ○ | ○ | ○ | Δ-○ | × | × |
| | Mottles | × | Δ-○ | ○ | ○ | Δ-○ | Δ-○ | Δ | × |
| | Dot shape | × | Δ-○ | ○ | ○ | Δ-○ | Δ-○ | × | × |
| | Drying property | × | ○ | ○ | ○ | ○ | ○ | ○ | ○ |

| | | | | | | | | | |
|---|---|---|---|---|---|---|---|---|---|
| @ Ex: Example, C: Comparative Example * Formula 1: Structure in General Formula (I), Si: Silicone-based surfactant # Surface resistivity (Unit: Ω) | | | | | | | | | |

As listed in Table 1, the printing sheets in Examples 1 to 5 having the coated layer made by blending the silicone-based surfactant in the continuous phase made of the acrylic polymer according to the present invention had excellent adhesion between the substrate and the coated layer. These printing sheets also had low surface resistivity and thus it was indicated that the printing sheets were less likely to cause paper jams and other troubles in the printing process due to electrostatic charge. Furthermore, these printing sheets were also excellent in terms of the presence or absence of the ink repellency and mottles and the printability such as the dot shape, and were also excellent in the drying properties of the ink. In particular, the printing sheets in Examples 1 to 4, in which polyether-modified silicones having the structure represented by General Formula (I) were used as surfactants, exhibited high printability. Of these printing sheets, the printing sheets in Examples 2 and 3, which used S2 or S3 having relatively low SP values, exhibited evenly excellent various physical properties indicating the adhesion and the printability.

### [Examples 6 and 7 and Comparative Examples 4 and 5]

The same operations as the operations in Example 1 were performed except that the amount of surfactant S1 was changed as listed in Table 2. The evaluation results are listed in Table 2.

### [Example 8 and Comparative Example 6]

100 parts by mass of the aqueous acrylic polymer emulsion M2, 0.4 parts by mass of the surfactant S1, 0.05 parts by mass of the defoamer (SN Deformer 777 (trade name) manufactured by SAN NOPCO LIMITED), and 100 parts by mass of purified water were blended to prepare a coated layer coating liquid. Here, the amount of the blended surfactant is 0.5% by mass relative to 100% by mass of the acrylic polymer (solid content). The same operations as the operations in Example 1 or Comparative Example 1 were performed to produce and evaluate the printing sheets except that the coating liquid was applied so that the dried film thickness was 8 um. The evaluation results are listed in Table 2.

**[Table 2]**

| Table 2 Amounts of blended surfactants and evaluation results of printing sheets | | | | | | | | | |
|---|---|---|---|---|---|---|---|---|---|
| Example@ | | C1 | C4 | Ex6 | Ex1 | Ex7 | C5 | Ex8 | C6 |
| Type of polymer | | M1 | M1 | M1 | M1 | M1 | M1 | M2 | M2 |
| Amount of surfactant* | | 0 | 0.05 | 0.20 | 0.50 | 1.00 | 2.00 | 0.50 | 0 |
| Evaluation result | Adhesion | Δ | Δ | ○ | ○ | ○ | ○ | ○ | Δ |
| | Ink repellency | × | Δ-× | ○ | ○ | ○ | Δ | ○ | × |
| | Mottles | × | Δ | Δ-○ | Δ-○ | Δ-○ | Δ | Δ-○ | × |
| | Dot shape | × | Δ-× | Δ-○ | Δ-○ | Δ-○ | Δ | Δ-○ | × |
| | Drying property | × | Δ | ○ | ○ | ○ | ○ | ○ | × |

| | | | | | | | | | |
|---|---|---|---|---|---|---|---|---|---|
| @ Ex: Example, C: Comparative Example * % by mass relative to solid content of polymer | | | | | | | | | |

The printing sheets according to the present invention in Examples 6 and 7, which had the coated layer made by blending the silicone-based surfactant in a ratio of 0.10% by mass or more and 1.00% by mass or less relative to 100% by mass of the acrylic polymer in the continuous phase made of the acrylic polymer, exhibited excellent adhesion and printability similar to the printing sheet in Example 1. On the other hand, with respect to the printing sheet in Comparative Example 4, in which the amount of the silicone-based surfactant was less than 0.10% by mass, both adhesion and printability were not sufficiently improved. The printing sheet in Comparative Example 5, in which the amount of the silicone-based surfactant was more than 1.00% by mass, also had somewhat inferior printability to the printability of the printing sheet in Example 1.

Even in a system having a thin coated layer using M2 as the acrylic polymer, an improvement effect was observed in the adhesion and printability by blending the specified amount of the silicone-based surfactant.

As described above, according to the present invention, the printing sheet having excellent printability and excellent adhesion between the substrate and the coated layer is provided. The printing sheet according to the present invention also has excellent antistatic performance and has the advantage of being less likely to cause paper jams and other troubles during printing. The printing sheet according to the present invention is also less likely to cause ink repellency and has quick-drying of inks and thus is particularly suitable for inkjet printing, oil-based offset printing, UV offset printing, and other printing.

## Claims

1. A printing sheet comprising
a coated layer including an acrylic polymer on one surface or both surfaces of a substrate, wherein
a silicone-based surfactant is blended in a ratio of 0.10% by mass or more and 1.00% by mass or less relative to 100% by mass of the acrylic polymer in a continuous phase made of the acrylic polymer.

2. The printing sheet according to claim 1, wherein the silicone-based surfactant is a polyether-modified silicone.

3. The printing sheet according to claim 2, wherein the polyether-modified silicone has a structure represented by General Formula (I): 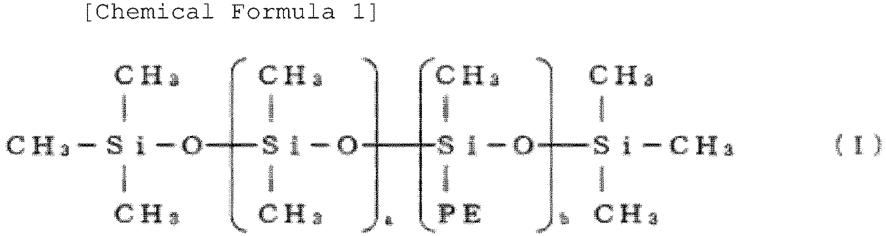 (in Formula (I), EG is a polyether group represented by -(C₂H₄O)_{c}(C₃H₆O)_{d}R; a represents an integer of 0 to 23; b represents an integer of 1 to 10; c represents an integer of 1 to 23, d represents an integer of 0 to 24; and R represents a hydrogen atom or an alkyl group having a carbon number of 1 to 4).

4. The printing sheet according to claim 1 or claim 2, wherein the acrylic polymer is an emulsion polymerization product of a radical polymerizable monomer of (meth)acrylic acid and/or a (meth)acrylic acid ester.

5. The printing sheet according to claim 4, wherein the radical polymerizable monomer is one or two or more monomers selected from the group consisting of acrylic acid, methacrylic acid, methyl acrylate, ethyl acrylate, n-butyl acrylate, hydroxyethyl acrylate, 2-ethylhexyl acrylate, methyl methacrylate, ethyl methacrylate, n-butyl methacrylate, and hydroxyethyl methacrylate.

6. The printing sheet according to any one of claims 1 to 5, wherein the substrate is a substrate comprising a polyolefin-based resin and an inorganic substance powder in a ratio of 50:50 to 10:90 in a mass ratio.

7. The printing sheet according to claim 6, wherein the inorganic substance powder is a calcium carbonate powder.

8. The printing sheet according to claim 7, wherein the calcium carbonate powder is a heavy calcium carbonate powder.

9. A method for producing a printing sheet, the method comprising
applying an aqueous acrylic polymer emulsion made by blending a silicone-based surfactant in a ratio of 0.10% by mass or more and 1.00% by mass or less relative to 100% by mass of an acrylic polymer to one surface or both surfaces of a substrate.

10. The method for producing a printing sheet according to claim 9, wherein a substrate comprising a polyolefin resin and an inorganic substance powder in a mass ratio of 50:50 to 10:90 in a mass ratio is molded into a sheet by extrusion, and the aqueous acrylic polymer emulsion is applied to one surface or both surfaces of the substrate sheet.
